# EUROPÄISCHE PATENTSCHRIFT

(11) **EP 1 470 348 B1**
(45) Veröffentlichungstag und Bekanntmachung des Hinweises auf die Patenterteilung: **16.11.2005**
(21) Anmeldenummer: 02793054.4
(22) Anmeldetag: 18.12.2002
(51) Int. Cl.: F16H 57/04

(54) **Planetengetriebe**
Planetary gear
Engrenage planétaire

(30) Priorität: 29.01.2002 DE 10203265
(43) Veröffentlichungstag der Anmeldung: 27.10.2004
(73) Patentinhaber: INA-Schaeffler KG, 91074 Herzogenaurach (DE)
(72) Erfinder: FUGEL, Wolfgang, 90453 Nürnberg (DE); REIMCHEN, Alexander, 90765 Fürth (DE)
(86) Internationale Anmeldenummer: PCT/EP2002/014432
(87) Internationale Veröffentlichungsnummer: WO 2003/064893

(56) Entgegenhaltungen:
- DE-A- 19 804 734
- DE-A- 19 902 565
- US-A- 6 135 910

## Beschreibung

### Anwendungsgebiet der Erfindung

Die Erfindung betrifft ein Planetengetriebe mit Anlaufscheiben für Planetenräder, die mit ihrer Aufnahmebohrung auf in einem Planetenträger festgelegten Planetenradbolzen angeordnet sind und beidseitig Planetenräder begrenzen, die über eine Lageranordnung auf den Planetenradbolzen drehbar gelagert sind, wobei zur Schmiermittelversorgung der Lageranordnung der Planetenradbolzen mit einer axialen und einer davon abzweigenden radialen Schmiermitteldurchtrittsbohrung und die Anlaufscheiben mit axialen Durchbrüchen versehen sind.

### Hintergrund der Erfindung

Derartige Anlaufscheiben in Planetengetrieben sind bereits in den unterschiedlichsten Ausführungsvarianten vorbekannt. Sie dienen dem axialen Anlauf des Planetenrades und schützen den ungehärteten Planetenradträger sowie das Planetenrad vor Verschleiß. Das Planetenrad läuft dabei mit einer planen Stirnfläche an einer ebenfalls planen Anlauffläche der Anlaufscheibe an. Das Planetenrad ist mit einer durchgehenden Bohrung versehen, mit der es mit Hilfe einer Lagerung auf dem Planetenradbolzen drehbar gehalten ist. Diese Lagerung kann beispielsweise durch einen Nadelkranz oder auch durch einen vollrolligen Nadelsatz gebildet sein. Je nach Lagerungsart laufen daher an den Anlaufscheiben entweder der Lagerkäfig oder die Stirnseiten der Lagernadeln an. Die Anlaufscheiben sind dabei zumeist aus Blech gestanzt. Die Oberfläche der Anlaufscheiben wird entweder geschliffen, in Walzqualität belassen oder ist beschichtet. Die Wahl des Werkstoffes der Scheiben und ihre Oberflächenqualität sowie ihre Oberflächenhärte ist im Wesentlichen von den vorgefundenen Reibungsverhältnissen abhängig.

Sehr oft sind jedoch die Schmierverhältnisse an den Kontaktstellen zwischen den Anlaufscheiben und den Stirnflächen der Planetenräder mangelhaft. In diesem Fall werden auch Bronzescheiben als Anlaufscheiben verwendet. Ab und an werden auch zwei Anlaufscheiben aus unterschiedlichen Werkstoffen nebeneinander eingesetzt oder es werden mehrschichtige Anlaufscheiben, beispielsweise plattierte Bleche, verwendet. Dabei sind die Werkstoffe Stahl und Bronze miteinander kombiniert. Diese Anordnung berücksichtigt die unterschiedlichen Anlauf- und Reibungsverhältnisse zwischen dem Planetenrad und der Anlaufscheibe einerseits und der Anlaufscheibe und dem Planetenradträger andererseits.

Auch wird durch eine entsprechende Gestaltung der Anlaufscheiben die Schmiermittelzirkulation innerhalb des Planetengetriebes und insbesondere an der Lagerung des Planetenrades in positiver Weise beeinflusst. Die Schmiermittelzirkulation in der Lagerung des Planetenrades und die Schmierung der Anlaufflächen der Anlaufscheiben im Kontaktbereich mit dem Planetenrad wird durch gezielt in die Oberfläche der Anlaufscheiben eingebrachte Ölnuten oder auch durch axiale Durchbrüche erreicht.

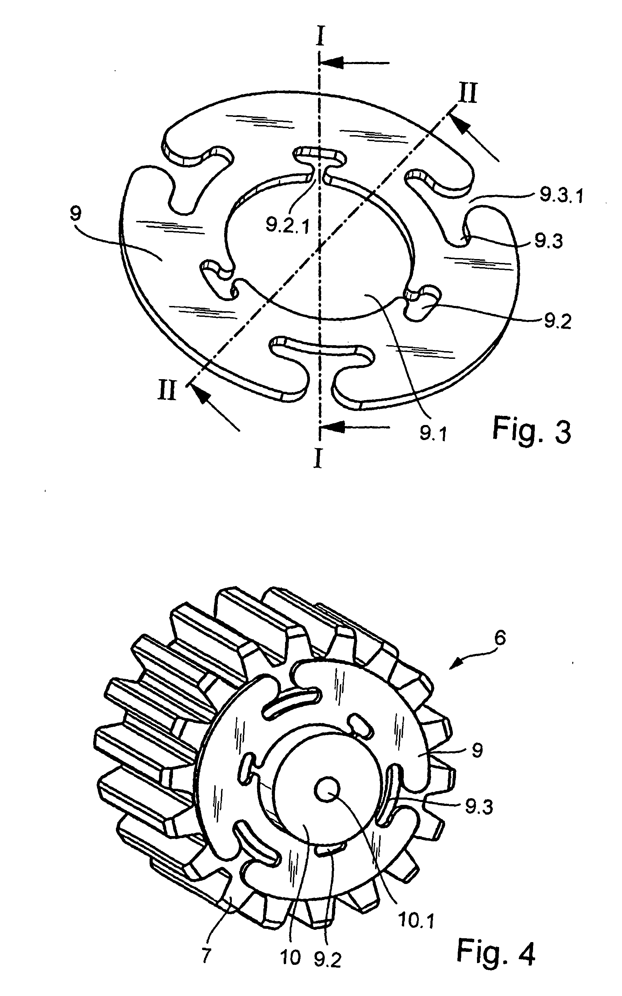

Eine solche Anlaufscheibe ist beispielsweise aus der DE 35 02 076 C1 vorbekannt. Diese Anlaufscheibe weist zwei plane als Anlaufflächen ausgebildete Stirnseiten auf und ist mit einer Winkelöffnung versehen, durch die Schmiermittel zur Lagerung gefördert werden soll. Eine andere Anlaufscheibe ist aus der DE 198 04 734 A1 vorbekannt. Sie ist als ein flacher Stahlring ausgebildet, dessen Stirnseiten mit Einprägungen und dessen Aufnahmebohrung mit Durchbrüchen versehen ist. Auch in der DE 44 18 693 C1 sind derartige Anlaufscheiben vorbeschrieben. Schließlich geht auch aus der DE 199 02 565 A1, die der nächstliegende stand der technik darstellt, eine solche Anlaufscheibe hervor. In den Figuren 3 und 4 dieser Vorveröffentlichung ist eine Anlaufscheibe gezeigt, an der beidseitig jeweils eine Anlauffläche ausgebildet ist. Die Anlauffläche ist durch eine Beölungsnut in eine erste und eine zweite Kontaktzone unterteilt. In die Beölungsnut münden an jeder Seite jeweils drei Schmiertaschen. Auch ist die Anlaufscheibe zusätzlich mit Durchbrüchen für einen Öldurchfluß versehen.

Bei diesen Anlaufscheiben ist von Nachteil, dass bei axialem Anlauf des Planetenrades an der Anlaufscheibe unter ungünstigen Umständen der Schmierfilm an den Kontaktstellen abgerissen bzw. unterbrochen werden kann. Die Folge sind Mangelschmierung und vorzeitiger Verschleiß an den Kontaktstellen, der im Extremfall zum Ausfall des gesamten Planetengetriebes führen kann.

### Zusammenfassung der Erfindung

Aufgabe der Erfindung ist es daher, Anlaufscheiben für ein Planetengetriebe bereitzustellen, mit deren Einsatz der Schmierfilm an den Kontaktstellen zwischen der Stirnseite des Planetenrades und der Anlauffläche der Anlaufscheibe nicht unterbrochen bzw. nicht abgeschnitten wird. Außerdem sollen die Anlaufscheiben auf einfache Art und Weise kostengünstig herstellbar sein.

Erfindungsgemäß wird diese Aufgabe nach dem kennzeichnenden Teil von Anspruch 1 in Verbindung mit dessen Oberbegriff dadurch gelöst, dass wenigstens an zwei gleichmäßig voneinander beabstandeten Umfangsstellen der Anlaufscheiben innere axiale Durchbrüche angeordnet sind, die mit deren Aufnahmebohrung über eine Einschnürung verbunden sind und zwischen den inneren axialen Durchbrüchen in radialer Richtung nach außen versetzt liegende äußere axiale Durchbrüche angeordnet sind, wobei sich die inneren axialen Durchbrüche in radialer Richtung betrachtet im Bereich der Wälzkörper der Lageranordnung befinden und die äußeren axialen Durchbrüche wenigstens einen Teil der Stirnseite der Planetenräder überdecken. Im Sinne der Erfindung können innere und äußere axiale Durchbrüche in radialer Richtung nacheinander oder auch sich überlappend angeordnet sein.

Das Schmiermittel gelangt zunächst über die axiale und die radiale Schmiermitteldurchtrittsbohrung im Planetenradbolzen in den Laufbahnbereich der Wälzlageranordnung der Planetenräder. Von dort erreicht, es die inneren axialen Durchbrüche der Anlaufscheiben, die gleichzeitig als Schmiermittelvorratsraum wirken. Auf diese Weise ist sichergestellt, dass die Anlaufflächen zwischen den Stirnseiten der Wälzkörper bzw. dem Lagerkäfig und der Anlaufscheibe stets mit einem Schmiermittelfilm versehen ist. Überflüssiges Schmiermittel erreicht bei vorhandenem Spalt zwischen Anlaufscheibe und Planetenrad bzw. zwischen Anlaufscheibe und Planetenradträger auch die äußeren axialen Durchbrüche, die wiederum als Schmiermittelvorratsraum wirken. Die Anlaufflächen zwischen Stirnseite des Planetenrades und Anlaufscheibe sowie Anlaufscheibe und Planetenradträger sind daher ebenfalls unter allen Betriebsbedingungen mit einem Reibung vermindernden Schmierfilm versehen. Durch diese erfindungsgemäße Ausbildung der Anlaufscheibe ist sichergestellt, dass ein gezielter Schmiermitteldurchfluss durch die Planetenradlagerung realisiert und so an allen Kontaktstellen der beteiligten Partner ein hydrodynamischer Schmierfilm gebildet ist. Durch Schmiermittelvorratswirkung von inneren und äußeren axialen Durchbrüchen ist praktisch eine Mangelschmierung ausgeschlossen. Darüber hinaus wirken die axialen Durchbrüche auch als zumindest vorübergehender Aufenthaltsort für eventuellen Abrieb der Lageranordnung.

Vorteilhafte Ausgestaltungen der erfindungsgemäßen Lösung sind in den Unteransprüchen 2 bis 7 beschrieben.

So ist nach Anspruch 2 vorgesehen, dass die äußeren axialen Durchbrüche der Anlaufscheiben in ihrer Umfangsausdehnung in radialer Richtung nach außen abnehmen. Durch diese Ausgestaltung, beispielsweise in Form eines Dreieckes, wird ein erhöhter Druckaufbau des Schmiermittels realisiert, der wiederum eine Trennung der beteiligten Reibungspartner in axialer Richtung und damit eine Reibungsverminderung bewirkt.

Nach einem weiteren Merkmal der Erfindung gemäß Anspruch 3 ist vorgesehen, dass die äußeren axialen Durchbrüche der Anlaufscheibe in radialer Richtung nach außen offen sind. Diese Variante der Anlaufscheibe ist besonders dann vorteilhaft, wenn durch einen erhöhten Schmiermitteldurchfluss durch die Lageranordnung des Planetenrades ein hoher Temperaturanstieg verhindert werden soll.

Nach einem anderen zusätzlichen Merkmal gemäß Anspruch 4 sollen die äußeren axialen Durchbrüche der Anlaufscheibe in radialer Richtung nach außen über eine Einschnürung offen sein. Diese sorgt dafür, dass immer nur ein Teil des Schmiermittels den äußeren axialen Durchbruch verlassen kann.

Nach Anspruch 5 sollen wenigstens die Kanten der axialen Durchbrüche der Anlaufscheiben verrundet sein. Diese Verrundung kann beispielsweise durch einen Gleitschleifvorgang realisiert werden, so dass auf diese Weise ein Ausschleppen des Schmiermittels aus den Durchbrüchen der Anlaufscheibe erleichtert ist.

Nach einem weiteren Merkmal der Erfindung gemäß Anspruch 6 sollen die Anlaufscheiben durch einen Stanzvorgang gefertigt sein. Diese Herstellungstechnologie erlaubt eine besonders preisgünstige Fertigung.

Schließlich ist nach dem letzten Anspruch 7 vorgesehen, dass die Anlaufscheiben mit einer die Reibung vermindernden Beschichtung versehen sein sollen.

Die Erfindung wird an nachstehenden Ausführungsbeispielen näher beschrieben.

### Kurze Beschreibung der Zeichnungen

Es zeigen:
- Figur 1: einen Längsschnitt durch einen Planetenradträger gemäß bekanntem Stand der Technik,
- Figuren 2 und 5: einen Längsschnitt durch eine erfindungsgemäße Planetenradlagerung,
- Figuren 3 und 6: eine perspektivische Darstellung einer erfindungsgemäßen Anlaufscheibe und
- Figuren 4 und 7: eine perspektivische Darstellung eines Planetenrades mit aufgesteckter erfindungsgemäßer Anlaufscheibe.

### Ausführliche Beschreibung der Zeichnungen

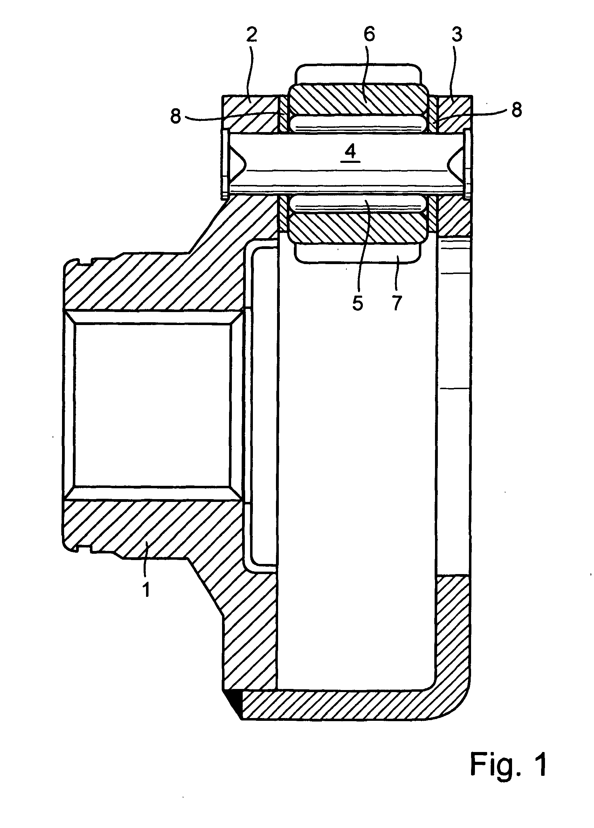

Der in Figur 1 nach dem Stand der Technik gezeigte Planetenradträger 1 weist zwei Seitenwände 2, 3 auf, in denen Planetenradbolzen 4 festgelegt sind. Auf diesen sind über Lageranordnungen 5 Planetenräder 6 drehbar gelagert, deren Zähne 7 einerseits mit einem nicht gezeigten Hohlrad und andererseits mit einem ebenfalls nicht gezeigten Sonnenrad kämmen. Auf den Planetenradbolzen 4 sind beidseitig der Planetenräder 6 Anlaufscheiben 8 angeordnet, die üblicherweise aus einem Material mit guten Gleiteigenschaften bestehen, wie z. B. mit Bronze plattierten Blech, und somit die Reibung zwischen Planetenrädern 6 und Planetenradträger 1 vermindern sollen.

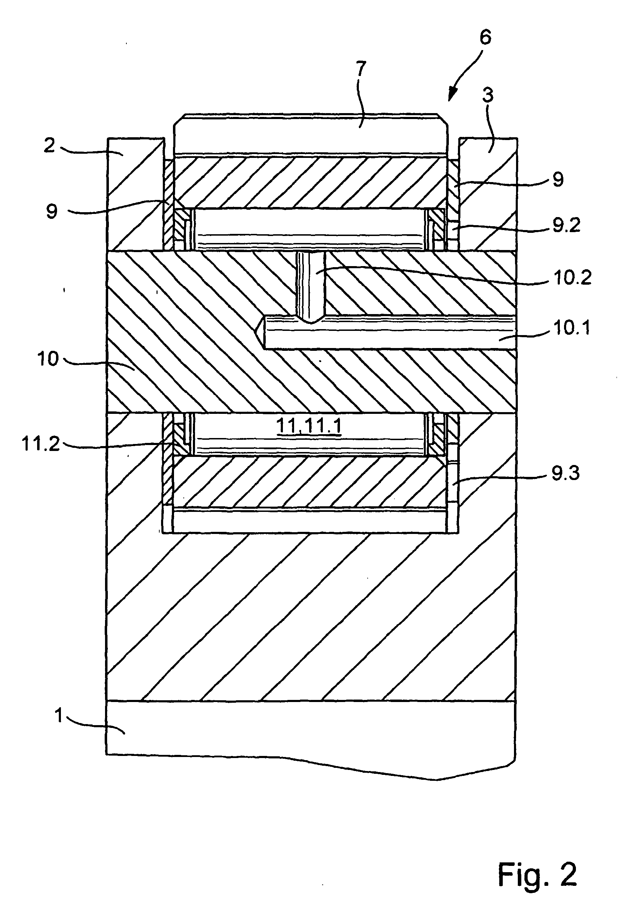

Die in den Figuren 2, 3 und 4 dargestellten erfindungsgemäßen Anlaufscheiben 9 sind mit ihren Aufnahmebohrungen 9.1 beidseitig der Planetenräder 6 auf dem Planetenradbolzen 10 aufgesteckt. Dieser besitzt eine axiale Schmiermitteldurchtrittsbohrung 10.1 und eine davon abzweigende radiale Schmiermitteldurchtrittsbohrung 10.2. Der Planetenradbolzen 10 ist wiederum in den Seitenwänden 2 und 3 des Planetenradträgers 1 verankert. Die Planetenräder 6 sind über einen aus Lagernadeln 11.1 und Käfig 11.2 bestehenden Nadelkranz 11 auf dem Planetenradbolzen 10 drehbar gelagert.

Wie die Figuren 2, 3 und 4 weiter zeigen, weist die Anlaufscheibe 9 an drei gleichmäßig voneinander beabstandeten Umfangsstellen innere axiale Durchbrüche 9.2 auf, die mit der Aufnahmebohrung 9.1 über Einschnürungen 9.2.1 verbunden sind. Zwischen den inneren axialen Durchbrüchen 9.2 sind radial nach außen versetzt angeordnete äußere axiale Durchbrüche 9.3 vorhanden, die nach außen über die Einschnürung 9.3.1 offen sind. Der in Figur 2 rechtszeitig gezeigte Schnitt durch die Anlaufscheibe 9 ist entlang der Linie I-I gelegt, während der linksseitig angeordnete Schnitt entlang der Linie II-II in Figur 3 gelegt ist. Wie die Figuren weiter zeigen, befinden sich die inneren axialen Durchbrüche 9.2 in radialer Richtung gesehen im Bereich des Nadelkranzes 11, während die äußeren axialen Durchbrüche 9.3 wenigstens einen Teil der Stirnfläche des Planetenrades 6 überdecken. Die Lage der inneren axialen Durchbrüche 9.2 zur Lage der äußeren axialen Durchbrüche 9.3 kann unterschiedlich sein, d. h. diese können sich in radialer Richtung nacheinander oder überlappend angeordnet sein.

Schmiermittel gelangt zunächst über die axiale Schmiermitteldurchtrittsbohrung 10.1 und die radiale Schmiermitteldurchtrittsbohrung 10.2 des Planetenradbolzens 10 in den Laufbahnbereich der Lagernadeln 11. Von dort wird es durch radiale Kräfte nach außen geschleudert und füllt zunächst die inneren axialen Durchbrüche 9.2, die somit als Schmiermittelreservoir wirken. Danach gelangt das Schmiermittel bei vorhandenem Spalt zwischen Planetenrad 6 und Anlaufscheibe 9 bzw. bei vorhandenem Spalt zwischen Anlaufscheibe 9 und Seitenwand 2, 3 auch in die äußeren axialen Durchbrüche 9.3, die wiederum über die Einschnürungen 9.3.1 verlassen werden können. Auf diese Weise ist ein kontinuierlicher Durchfluss von Schmiermittel durch die Lageranordnung gewährleistet, so dass die beteiligten Reibungspartner immer durch einen Schmierfilm voneinander getrennt sind.

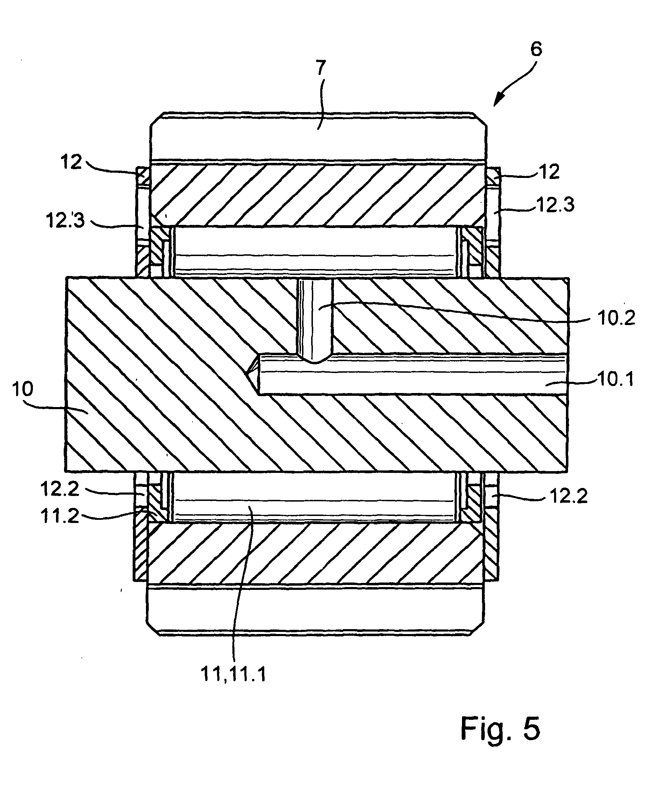

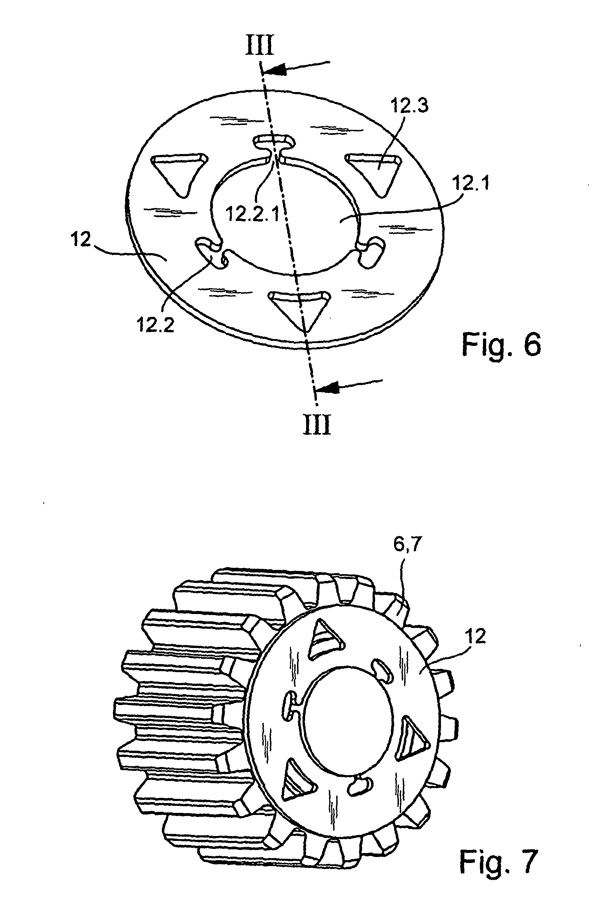

Die in den Figuren 5, 6 und 7 gezeigte Laufscheibe 12 unterscheidet sich von der Laufscheibe 9 gemäß den Figuren 2, 3 und 4 lediglich dadurch, dass die äußeren axialen Durchbrüche 12.3 dreieckförmig ausgebildet und nicht nach außen offen sind. Der Schnitt in Figur 5 zeigt die beiden rechts- und linksseitig des Planetenrades 6 angeordneten Laufscheiben 12 entlang der Linie III-III in Figur 6. Auch hier ist die Anordnung von inneren axialen Durchbrüchen 12.2 und äußeren axialen Durchbrüchen 12.3 in verschiedener Weise möglich. Diese sind entweder in radialer Richtung gesehen nacheinander angeordnet oder können sich auch überschneiden. Als zweckmäßig für den Schmiermitteldurchfluss hat es sich erwiesen, wenn wenigstens die Kanten der axialen Durchbrüche 9.2, 9.3, 12.2 und 12.3 verrundet sind.

### Bezugszeichen

- 1: Planetenradträger
- 2: Seitenwand
- 3: Seitenwand
- 4: Planetenradbolzen
- 5: Lageranordnung
- 6: Planetenräder
- 7: Zahn
- 8: Anlaufscheibe
- 9: Anlaufscheibe
- 9.1: Aufnahmebohrung
- 9.2: innere axiale Durchbrüche
- 9.2.1: Einschnürung
- 9.3: äußere axiale Durchbrüche
- 9.3.1: Einschnürung
- 10: Planetenradbolzen
- 10.1: axiale Schmiermitteldurchtrittsbohrung
- 10.2: radiale Schmiermitteldurchtrittsbohrung
- 11: Nadelkranz
- 11.1: Lagernadeln
- 11.2: Käfig
- 12: Anlaufscheibe
- 12.1: Aufnahmebohrung
- 12.2: innere axiale Durchbrüche
- 12.2.1: Einschnürung
- 12.3: äußere axiale Durchbrüche

## Patentansprüche

1. Planetengetriebe mit Anlaufscheiben (9, 12) für Planetenräder (6), die mit ihrer Aufnahmebohrung (9.1, 12.1) auf in einem Planetenradträger (1) festgelegten Planetenradbolzen (10) angeordnet sind und beidseitig Planetenräder (6) begrenzen, die über eine Wälzlageranordnung (11) auf den Planetenradbolzen (10) drehbar gelagert sind, wobei zur Schmiermittelversorgung der Lageranordnung (11) der Planetenradbolzen (10) mit einer axialen (10.1) und einer davon abzweigenden radialen Schmiermitteldurchtrittsbohrung (10.2) und die Anlaufscheiben (9, 12) mit axialen Durchbrüchen versehen sind, **dadurch gekennzeichnet, dass** wenigstens an zwei gleichmäßig voneinander beabstandeten Umfangsstellen der Anlaufscheiben (9, 12) innere axiale Durchbrüche (9.2, 12.2) angeordnet sind, die mit deren Aufnahmebohrung (9.1, 12.1) über eine Einschnürung (9.2.1, 12.2.1)verbunden sind und zwischen den inneren axialen Durchbrüchen (9.2, 12.2) in radialer Richtung nach außen versetzt liegende äußere axiale Durchbrüche (9.3, 12.3) angeordnet sind, wobei sich die inneren axialen Durchbrüche (9.2, 12.2) in radialer Richtung betrachtet im Bereich der Wälzkörper (11.1) der Lageranordnung (11) befinden und die äußeren axialen Durchbrüche (9.3, 12.3) wenigstens einen Teil der Stirnseite der Planetenräder (6) überdecken.

2. Planetengetriebe nach Anspruch 1, **dadurch gekennzeichnet, dass** die äußeren axialen Durchbrüche (12.3) der Anlaufscheibe (12) in ihrer Umfangsausdehnung in radialer Richtung nach außen abnehmen.

3. Planetengetriebe nach Anspruch 1, **dadurch gekennzeichnet, dass** die äußeren axialen Durchbrüche (9.3) der Anlaufscheibe (9) in radialer Richtung nach außen offen sind.

4. Planetengetriebe nach Anspruch 1, **dadurch gekennzeichnet, dass** die äußeren axialen Durchbrüche (9.3) der Anlaufscheibe (9) in radialer Richtung nach außen über eine Einschnürung (9.3.1) offen sind.

5. Planetengetriebe nach Anspruch 1, **dadurch gekennzeichnet, dass** wenigstens die Kanten der axialen Durchbrüche (9.2, 9.3, 12.2, 12.3) der Anlaufscheiben (9, 12) verrundet sind.

6. Planetengetriebe nach Anspruch 1, **dadurch gekennzeichnet, dass** die Anlaufscheiben (9, 12) aus einem Blech durch einen Stanzvorgang gefertigt sind.

7. Planetengetriebe nach Anspruch 1, **dadurch gekennzeichnet, dass** die Anlaufscheiben (9, 12) mit einer die Reibung vermindernden Beschichtung versehen sind.

## Claims

1. Planetary gear mechanism having stop discs (9, 12) for planetary gears (6) which are arranged with their receptacle hole (9.1, 12.1) on planetary-gear pins (10), which are fixed in a planetary-gear carrier (1), and delimit on both sides planetary gears (6) which are mounted rotatably on the planetary-gear pins (10) via a roller-bearing arrangement (11), the planetary-gear pins (10) being provided with an axial (10.1) and, branching off from the latter, a radial lubricant passage hole (10.2) and the stop discs (9, 12) being provided with axial apertures for supplying the bearing arrangement (11) with lubricant, **characterized in that** inner axial apertures (9.2, 12.2) are arranged at least at two circumferential points, spaced apart from one another uniformly, of the stop discs (9, 12), which inner axial apertures (9.2, 12.2) are connected to their receptacle hole (9.1, 12.1) via a constriction (9.2.1, 12.2.1), and outer axial apertures (9.3, 12.3) which lie offset outwards in the radial direction are arranged between the inner axial apertures (9.2, 12.2), the inner axial apertures (9.2, 12.2) being located, as viewed in the radial direction, in the region of the rolling bodies (11.1) of the bearing arrangement (11), and the outer axial apertures (9.3, 12.3) covering at least a part of the end side of the planetary gears (6).

2. Planetary gear mechanism according to Claim 1, **characterized in that** the circumferential extent of the outer axial apertures (12.3) of the stop disc (12) decreases outwards in the radial direction.

3. Planetary gear mechanism according to Claim 1, **characterized in that** the outer axial apertures (9.3) of the stop disc (9) are open to the outside in the radial direction.

4. Planetary gear mechanism according to Claim 1, **characterized in that** the outer axial apertures (9.3) of the stop disc (9) are open to the outside in the radial direction via a constriction (9.3.1).

5. Planetary gear mechanism according to Claim 1, **characterized in that** at least the edges of the axial apertures (9.2, 9.3, 12.2, 12.3) of the stop discs (9, 12) are rounded.

6. Planetary gear mechanism according to Claim 1, **characterized in that** the stop discs (9, 12) are manufactured from a metal sheet in a punching operation.

7. Planetary gear mechanism according to Claim 1, **characterized in that** the stop discs (9, 12) are provided with a coating which reduces the friction.

## Revendications

1. Engrenage planétaire avec des rondelles de butée (9, 12) pour des pignons satellites (6), qui sont disposées par leur perçage récepteur (9.1, 12.1) sur des axes de satellites (10) fixés dans un porte-satellites (1) et qui délimitent de part et d'autre des pignons satellites (6) qui sont montés à rotation sur les axes de satellites (10) par l'intermédiaire d'un ensemble (11) de palier à roulement, sachant que, pour l'alimentation en lubrifiant de l'ensemble de palier (11), l'axe de satellite (10) est pourvu d'un perçage axial (10.1) de passage de lubrifiant et d'un perçage radial (10.2) de passage de lubrifiant qui bifurque du perçage axial et les rondelles de butée (9, 12) sont pourvues de percements axiaux, **caractérisé en ce que** des percements axiaux intérieurs (9.2, 12.2) sont disposés en au moins deux points équidistants de la périphérie des rondelles de butée (9, 12), percements qui communiquent avec le perçage récepteur (9.1, 12.1) de la rondelle de butée par l'intermédiaire d'un rétrécissement (9.2.1, 12.2.1), et des percements axiaux extérieurs (9.3, 12.3) sont disposés entre les percements axiaux intérieurs (9.2, 12.2) en étant décalés radialement vers l'extérieur, sachant que les percements axiaux intérieurs (9.2, 12.2) se trouvent, en vue en direction radiale, dans la région des éléments roulants (11.1) de l'ensemble de palier (11), et que les percements axiaux extérieurs (9.3, 12.3) recouvrent au moins une partie de la face frontale des pignons satellites (6).

2. Engrenage planétaire, selon la revendication 1, **caractérisé en ce que** l'étendue périphérique des percements axiaux extérieurs (12.3) de la rondelle de butée (12) diminue radialement vers l'extérieur.

3. Engrenage planétaire selon la revendication 1, **caractérisé en ce que** les percements axiaux extérieurs (9.3) de la rondelle de butée (9) sont ouverts radialement vers l'extérieur.

4. Engrenage planétaire selon la revendication 1, **caractérisé en ce que** les percements axiaux extérieurs (9.3) de la rondelle de butée (9) sont ouverts radialement vers l'extérieur par l'intermédiaire d'un rétrécissement (9.3.1).

5. Engrenage planétaire selon la revendication 1, **caractérisé en ce qu'**au moins les arêtes des percements axiaux (9.2, 9.3, 12.2, 12.3) des rondelles de butée (9, 12) sont arrondies.

6. Engrenage planétaire selon la revendication 1, **caractérisé en ce que** les rondelles de butée (9, 12) sont fabriquées à partir d'une tôle par poinçonnage.

7. Engrenage planétaire selon la revendication 1, **caractérisé en ce que** les rondelles de butée (9, 12) sont pourvues d'un revêtement diminuant la friction.
